# EUROPEAN PATENT SPECIFICATION

(11) **EP 2 192 186 B1**
(45) Date of publication and mention of the grant of the patent: **09.03.2016**
(21) Application number: 08170320.9
(22) Date of filing: 28.11.2008
(51) Int. Cl.: C12N 15/10, G01N 35/02, G01N 35/10

(54) **System and method for the automated extraction of nucleic acids**
System und Verfahren zur automatischen Extraktion von Nukleinsäuren
Système et précédé pour l'extraction automatisée des acides nucléiques

(43) Date of publication of application: 02.06.2010
(73) Proprietor: F. Hoffmann-La Roche AG, 4070 Basel (CH); Roche Diagnostics GmbH, 68305 Mannheim (DE)
(72) Inventor: Bachmann, Hans-Rudolf, 5619 Buttikon (CH); Haack, Carsten, 6330 Cham (CH); Knobel, Rolf, 6343 Rotkreuz (CH); Barmettler, Kurt, 6005 Luzern (CH); Burch, Herbert, 6330 Cham (CH); Burmester, Jörg, San Ramon, CA, 94582 (US)
(74) Representative: Peterreins Schley

(56) References cited:
- EP-A- 0 977 039
- EP-A- 1 278 067
- EP-A- 1 615 037
- WO-A-00/21668
- US-A1- 2002 098 117
- US-A1- 2003 059 823

## Description

### TECHNICAL FIELD

The present invention is concerned with nucleic acids containing sample processing and more particularly relates to a system and method for the automated extraction of nucleic acids.

### BACKGROUND OF THE INVENTION

Nucleic acids (DNA = deoxyribonucleic acid, RNA = ribonucleic acid) are frequently used as a starting material for various analyses and assays in medical and pharmaceutical research, clinical diagnosis and genetic fingerprinting which typically require high quantity nucleic acids input. In these days, adequate quantities of nucleic acids may be readily obtained by various automated in-vitro nucleic acids amplification techniques, e.g., based on the well-known polymerase chain reaction (PCR), which usually require extraction (purification) of the nucleic acids prior to their amplification.

Basically, extraction of nucleic acids from intact cells or viruses involves releasing the nucleic acids from their envelopes such as cell membranes into the surrounding medium and separating and eluting the released nucleic acids from the remainder. While nucleic acids may be easily released in mixing the nucleic acids containing samples with specific reagents, followed by thermally incubating the sample-reagent mixtures obtained to cause lysis of the envelopes, separation and elution of the released nucleic acids is somewhat more difficult. A separation technique often used in today's clinical practice relies on a solid adsorption matrix such as magnetic particles which can be made to reversibly (specifically or non-specifically) bind to the released nucleic acids. When applying a magnetic field, the nucleic acids-bound particles can, e.g., be drawn to and hold on the inner wall of the cavity holding the sample enabling the surrounding medium to be flushed away and replaced by another fluid to re-suspend the nucleic acids therein.

In consideration of the fact that there is an increasing number of analyses and assays requiring high quantity nucleic acids input, a strong demand for the automated extraction of nucleic acids prior to their amplification can be observed.

However, automated nucleic acids extraction systems as are presently available on the market typically suffer from an undesirably high consumption of disposables such as pipetting tips and multi-well plates which disadvantageously enlarges the over-all costs of sample processing and, due to frequent refilling operations, may cause a burden on technicians. On the other hand, when re-using pipetting tips and multi-well plates several times, a problem of carry-over of substances and cross-contamination of the samples is likely to occur which deteriorate the purity of nucleic acids obtained jeopardizing the reliability of the system.

The European patent application No. 1615037 A1 is related to an instrument and method for handling liquids comprising a first working area designed to accommodate the samples and to bring them into a form ready to be analyzed and a second working area designed to isolate components of the sample. Specifically, in the case of isolating nucleic acids, the liquid as received from the first working area contains reagents for lysing cells and glass magnetic particles as well as reagents assisting in binding of nucleic acids to glass surfaces. The vessels containing these mixtures of samples and reagents are transferred to the second working area. Then, each mixture is aspirated and dispensed into another vessel for incubating, releasing the nucleic acids and removing the remaining cellular components.

The European patent application No. 0977039 relates to an analysis apparatus and method for handling body fluids not using processing, reagent and output plates for processing fluids. This document is also silent on providing reagents for the later mixing with samples.

The present invention has been achieved in view of the above problems. It thus is an object of the invention to provide a new system for the extraction of nucleic acids prior to amplification which allows for a reduction of disposables consumed per single nucleic acids extraction run without enlarging a risk of carry-over of substances and cross-contamination of samples, respectively.

### SUMMARY OF THE INVENTION

This object is accomplished by a system and process according to the independent claims. Preferred embodiments are given by the sub-claims.

According to a first aspect, the invention proposes a new system for the automated extraction of nucleic acids from their envelopes of a plurality of nucleic acids containing samples such as nucleic acids containing cell solutions.

Accordingly, a system for the automated extraction of nucleic acids from nucleic acids containing samples is provided which comprises at least one set of three plates, each of which having a plurality of cavities, which include a process plate for processing the samples to extract the nucleic acids, a reagent plate for providing reagents for mixing with the samples and an output plate for outputting the extracted nucleic acids. Each one of the plates may, for instance, be embodied as a disposable multi-well plate having a planar array of cavities (wells) and, for instance, may be molded by conventional injection molding techniques.

The nucleic acids containing samples to be processed for the extraction of nucleic acids are contained in cavities of the process plate. The cavities of the process plate are manually or automatically filled with the samples which occupy at least some or all cavities of the process plate.

The system further comprises a reagent pipetting device including a plurality of reagent pipettes, each of which being provided with a re-usable (multiply usable) pipette tip, adapted for transferring of reagents to the cavities of the reagent plate. When transferring reagents to the cavities of the reagent plate, contact of the re-usable pipette tips with the walls of the cavities and dipping of the pipette tips into dispensed reagents is avoided. The re-usable pipette tips are being fixedly secured to the reagent pipettes of the reagent pipetting device and preferably are made of a metallic material such as steel. The reagents are provided in cavities of the reagent plate using the re-usable pipette tips of the reagent pipetting device. The re-usable pipette tips may be repeatedly used for transferring of reagents, e.g., from system-housed reagent containers to the reagent plate.

In the present invention, the term "reagent" is intended to also include fluids which do not react with the samples (i.e. adjuvants) such as wash solutions.

The number of cavities of the reagent plate may be smaller than or equal to the number of cavities of the process plate.

The system further comprises a sample pipetting device including a plurality of sample pipettes, each of which being provided with a disposable pipette tip, adapted for transferring of fluids to or from the cavities of the reagent, process and output plates. The disposable pipette tips are detachably fixed to the sample pipettes to be easily replaced and preferably are made of plastic material. In contrast to the re-usable pipette tips of the reagent pipetting device which are to be used several times and, typically, are washed in-between consecutive pipetting operations, the disposable pipette tips are to be used only for pipetting operations of one sample or of fluids resulting from the same sample.

Using the disposable pipette tips of the sample pipetting device, the reagents which are contained in the cavities of the reagent plate are transferred to the samples to thereby obtain sample-reagent mixtures, wherein each cavity of the reagent plate is (reciprocally) assigned one-to-one to a sample. One or more mixing steps, e.g., using the disposable pipette tips for sip-and-spit-mixing, may be performed.

The sample-reagent mixtures obtained are incubated in the cavities of the process plate by means of an incubating device such as a heating device to cause lysis of the nucleic acids containing envelopes in order to release the nucleic acids into the surrounding medium to thereby obtain released nucleic acids containing fluids.

After the lysis (or maybe even before or during) magnetically responsive particles are added - regularly in form of a suspension which contains the particles. The magnetically responsive particles are able to bind to the nucleic acids. Various types of such particles are known in the art. Unspecific binding can be achieved with particles having a surface with affinity to nucleic acids in general, as e.g. silicon dioxide. Alternatively, specifically binding particles may be employed as well. Such particles, e.g., have nucleic acid capture probes on their surface which specifically bind to matching nucleic acids.

The system further comprises a separating device for separating magnetically responsive particles contained in the released nucleic acids containing fluids contained in the cavities of the process plate to thereby magnetically separate the released particle-bound nucleic acids from the fluids. This may be repeatedly performed in transferring fluids into the cavities of the process plate, followed by applying a magnetic field and removing the supernatants by means of the sample pipetting device.

Using the disposable pipette tips of the sample pipetting device, the extracted nucleic acids containing fluids are transferred into the cavities of the output plate, wherein each cavity of the process plate which contains extracted nucleic acids is (reciprocally) assigned one-to-one to a cavity of the output plate.

Accordingly, the disposable pipette tips are used for transferring the reagents from the reagent plate to the process plate and for transferring the extracted nucleic acids containing fluids to the output plate, wherein each sample is assigned one-to-one to both of a cavity in the reagent plate and a cavity of the output plate. Furthermore, each sample, i.e. a cavity of the process plate containing the sample, is assigned one-to-one to at least one disposable pipette tip used for performing above pipetting operations. This means an individual disposable pipette tip is only used for pipetting of fluids relating to the same sample but not for pipetting operations of another sample or fluids resulting therefrom.

Stated more particularly, an individual sample, i.e. a cavity of the process plate containing the sample, a cavity of the reagent plate and a cavity of the output plate, together with the at least one disposable pipette tip used for pipetting operations mutually constitute an individual sample process channel for extracting the nucleic acids, so that a separate sample process channel is used for processing an individual sample. Using individual sample process channels, cross contamination between samples is advantageously avoided. Furthermore, since only re-usable pipette tips of the reagent pipetting device are used for transferring the reagents (e.g. from reagent containers) to the cavities of the reagent plate obviating contacting the walls of the cavities of the reagent plate when dispensing reagents and obviating dipping into dispensed reagents, carry-over of substances into the reagent containers is advantageously avoided.

A controller which, for instance, may be embodied as a programmable logic controller running a machine-readable program provided with instructions to perform operations in accordance with a predetermined process operation plan may be used for controlling the steps performed to extract nucleic acids from the nucleic acids containing samples. In that, the controller is electrically connected to the system components which require control as specified by the process operation plan which include both the reagent and sample pipetting devices, incubating and separating devices. Stated more particularly, the controller receives information from the different components of the system and generates and transmits corresponding control signals for controlling the components according to the process operation plan.

Accordingly, the controller running a machine-readable program is configured to control: repeatedly using the re-usable pipette tips of the reagent pipetting device for providing reagents in cavities of the reagent plate; transferring the reagents to the samples using the disposable pipette tips of the sample pipetting device to obtain sample-reagent mixtures; incubating the sample-reagent mixtures in cavities of the process plate using the incubating device to release the nucleic acids to obtain released nucleic acids containing fluids; separating the released nucleic acids contained in the released nucleic acids containing fluids in cavities of the process plates using the separating device to obtain extracted nucleic acids containing fluids; and transferring the extracted nucleic acids containing fluids to cavities of the output plate using the disposable pipette tips of the sample pipetting device.

Hence, the system of the present invention circumvents the problems of conventional extraction systems in providing and processing the samples in a same process plate thus consuming a lower number of disposable plates per single nucleic acids extraction run. Since the reagents are provided using re-usable pipette tips, consumption of disposable pipette tips may advantageously be reduced. Moreover, using re-usable pipette tips for transferring of reagents to the reagent plate and using disposable pipette tips for transferring the reagents between the reagent, process and output plates, carry-over of substances can advantageously be avoided. Furthermore, a high purity of the extracted nucleic acids can be achieved using separate sample process channels for each of the nucleic acids containing samples advantageously avoiding cross-contamination between the samples.

According to a preferred embodiment of the system of the invention, the number of cavities containing the samples is chosen to be equal to the number of cavities containing the reagents, wherein each of the samples is assigned one-to-one to each of: a cavity of the reagent plate containing the reagent, at least one disposable pipette tip and a cavity of the output plate. Stated more specifically, an individual sample, a cavity of the reagent plate containing the reagent and a cavity of the output plate, together with at least one disposable pipette tip commonly constitute an individual sample process channel for extracting the nucleic acids. Since there is a one-to-one assignment of individual samples to cavities of both the reagent and output plates simultaneous parallel processing of the nucleic acids containing samples in the process plate is enabled.

According to another preferred embodiment of the system of the invention, a first range of movements of the reagent pipetting device and a second range of movements of the sample pipetting device exclusively overlap at a reagent plate containing area which, aside from reducing the costs of the system, in view of a reduced danger of collision, advantageously allows for a simplified control of the pipetting devices. Moreover, spatially separating the pipetting devices outside the reagent plate containing area advantageously contributes in avoiding carry-over of substances and cross-contamination of samples.

According to another preferred embodiment of the invention, the system comprises a washing device, adapted for washing of the re-usable pipetting tips of the reagent pipetting device. The controller preferably is configured to control washing of the re-usable pipetting tips of the reagent pipetting device in-between consecutive pipetting operations. Such embodiment advantageously avoids carry-over or cross-contamination when transferring different reagents to the cavities of the reagent plate.

According to another preferred embodiment of the invention, separation of the nucleic acids in the released nucleic acid containing fluids involves the use of magnetically responsive particles (i.e. magnetically attractable or repellable particles which can be attracted or repelled by a magnetic field which not necessarily have to be magnetic themselves) which can be made to reversibly (specifically or non-specifically) bind to the nucleic acids. In that case, the controller may, for instance, be configured to control: adding of the magnetically responsive particles to the sample-reagent mixtures and attaching of the particles to the nucleic acids; applying a magnetic field by means of a magnetic field generation device to attract the nucleic-acid bound particles to the inner walls of the cavities of the process plate and removing of non-bound sample components from the cavities of the process plate; detaching the nucleic acids from the magnetic particles (eluting); separating the magnetic particles; and transferring the extracted nucleic acids containing fluids to cavities of an output plate.

In above embodiment of the invention, it may be preferred to fix the heating and magnetic field generation devices to a common carrier for moving each of them into an operative position in which it is operable to process the samples contained in the reagent plate and an inoperative position, respectively, which advantageously saves space to diminish the overall dimensions of the system. Further, it enables preferred embodiments where the process plate is kept stationary during processing. More specifically, the heating and magnetic field generation devices may, for instance, be moved into operative and inoperative positions including turning the devices around a common rotational axis which enables a highly compact construction of the system in which each device may either face the cavities of the process plate or can be turned away therefrom.

According to another preferred embodiment of the invention, the system comprises at least one holder, preferably a rack, for supporting the plates, with the holder being movably (e.g. slidably) supported by means of a structural member of the system such as a work-plate enabling movement of the holder into an inoperative holder position, adapted for loading or unloading the plates and an operative holder position, adapted for processing the samples contained in the cavities of the process plate. Typically, when positioned in inoperative position, the holder may at least partly reside outside a system housing for loading/unloading the plates and, when positioned in operative position, resides inside the system housing for processing of the nucleic acids containing samples contained in the process plate. Such embodiment advantageously allows the plates to be readily loaded into the system or removed therefrom. Filling of the cavities of the process plate with the nucleic acids containing samples may thus easily be performed, e.g., in filling the samples into the cavities of the process plate, followed by placing the process plate in the holder, or, in placing the process plate in the holder, followed by filling the samples into the cavities of the process plate.

Providing for a movably supported holder, it may be particularly preferred to accommodate the process and output plates by a same holder. It specifically may be preferred that the holder enables access to the cavities of the process plate from their bottom sides for extraction of the nucleic acids contained therein using the heating and magnetic field generation devices.

According to another preferred embodiment of the invention, the system comprises at least one fluid waste plate having plural cavities to receive waste fluids arising in extracting the nucleic acids, so that the fluid waste plate may advantageously be used for discarding waste fluid arising in consecutive runs of the systems to thus provide for additional space for the processing of nucleic acids containing samples.

According to another preferred embodiment of the invention, the system comprises at least one tip waste plate having plural cavities to receive used disposable pipette tips arising in extracting the nucleic acids, so that the tip waste plate may advantageously be used for discarding used pipette tips arising in consecutive runs of the systems to thus provide for additional space for the processing of nucleic acids containing samples.

According to another preferred embodiment of the invention, the at least one fluid waste plate and the at least one tip waste plate are supported by a same holder which enables the waste material to be conveniently removed from the system.

According to another preferred embodiment of the invention, the system further comprises at least one tip plate having a plurality of cavities filled with disposable pipette tips to be used by the sample pipetting device in extracting the nucleic acids which advantageously allows for a storage of disposable pipette tips in the system to thereby enable plural consecutive runs of the system. It that case, it may be highly preferable to support plural tip plates by a same holder, so that the system may be conveniently charged with the tip plates.

The system as above-described may be accommodated in a system housing for shielding from environmental (external) influences.

According to a second aspect, the invention proposes a new method for the automated extraction of nucleic acids from their envelopes such as cell membranes of a plurality of nucleic acids containing samples.

Accordingly, a method for the automated extraction of nucleic acids from nucleic acids containing samples is provided which comprises the following steps of:
(a) providing the nucleic acids containing samples in cavities of a process plate;
(b) repeatedly using re-usable pipette tips for providing reagents for mixing with the samples in cavities of a reagent plate;
(c) transferring the reagents to said samples using disposable pipette tips, wherein each one of the samples is assigned one-to-one both to a cavity of the reagent plate and a disposable pipette tip to thereby obtain sample-reagent mixtures;
(d) incubating the sample-reagent mixtures in the cavities of the process plate to thereby release the nucleic acids to obtain released nucleic acids containing fluids;
(e) separating the released nucleic acids contained in the released nucleic acids containing fluids in the cavities of the process plate to obtain extracted nucleic acids containing fluids; and
(f) transferring the extracted nucleic acids containing fluids to cavities of an output plate using disposable pipette tips, wherein each one of the separated nucleic acids containing fluids is assigned one-to-one both to a cavity of the output plate and a disposable pipette tip.

According to a preferred embodiment of the process of invention, for each sample, only one disposable pipette tip is used for transferring reagent from a cavity of the reagent plate to a cavity of the process plate containing the nucleic acids containing sample assigned one-to-one thereto and for transferring the extracted nucleic acids containing fluid obtained therefrom to a cavity of the output plate assigned one-to-one thereto. While allowing for high-purity nucleic acids extraction due to separate sample process channels, such embodiment advantageously allows a particularly small consumption of disposable pipette tips.

Alternatively, according to another preferred embodiment of the process of invention, for each sample, one disposable pipette tip is used for transferring a reagent to the nucleic acids containing sample assigned one-to-one thereto and another (one) disposable pipette tip is used for transferring the extracted nucleic acids containing fluid obtained therefrom to a cavity of the output plate assigned one-to-one thereto. While allowing for a small consumption of disposable pipette tips, particularly high-purity nucleic acids extraction may be obtained due to transferring the extracted nucleic acids to the output plate using a fresh disposable pipette tip.

According to another preferred embodiment of the process of invention, the re-usable pipette tips are washed in-between consecutive pipetting operations to thereby prevent carry-over or cross-contamination of substances.

According to another preferred embodiment the number of disposable pipette tips is the number of reusable pipette tips times an integer number.

According to another preferred embodiment of the process of invention, the disposable pipette tips are used to transfer waste fluids arising in extracting the nucleic acids to cavities of a fluid waste plate, e.g., to provide for additional space for the processing of nucleic acids containing samples.

According to another preferred embodiment of the process of invention, used disposable pipette tips arising in extracting the nucleic acids are stored in cavities of a tip waste plate, e.g., to provide for additional space for the processing of nucleic acids containing samples.

According to another preferred embodiment of the invention, the process plate is kept stationary during and in-between releasing of the nucleic acids, separating of the nucleic acids from the remaining cell components and transferring (eluting) the nucleic acids which advantageously avoids spilling and/or contamination of the samples.

### BRIEF DESCRIPTION OF THE DRAWINGS

Other and further objects, features and advantages of the invention will appear more fully from the following description. The accompanying drawings, which are incorporated in and constitute a part of the specification, illustrate a preferred embodiment of the invention, and together with the general description given above and the detailed description given below, serve to explain the principles of the invention.
- FIG. 1: is a schematic elevational view of an exemplary embodiment of the system of the invention;
- FIG. 2: is an enlarged fragmentary view of the system of FIG. 1 illustrating a pipetting operation of the reagent pipetting device;
- FIG. 3: is another enlarged fragmentary view of the system of FIG. 1 illustrating another pipetting operation of the reagent pipetting device;
- FIG. 4: is another enlarged fragmentary view of the system of FIG. 1 illustrating a pipetting operation of the sample pipetting device;
- FIG. 5: is another enlarged fragmentary view of the system of FIG. 1 illustrating another pipetting operation of the sample pipetting device;
- FIG. 6: is another enlarged fragmentary view of the system of FIG. 1 illustrating yet another pipetting operation of the sample pipetting device;
- FIG. 7: is another enlarged fragmentary view of the system of FIG. 1 illustrating yet another pipetting operation of the sample pipetting device;
- FIG. 8: is another enlarged fragmentary view of the system of FIG. 1 illustrating yet another pipetting operation of the sample pipetting device.

### DETAILED DESCRIPTION OF THE INVENTION

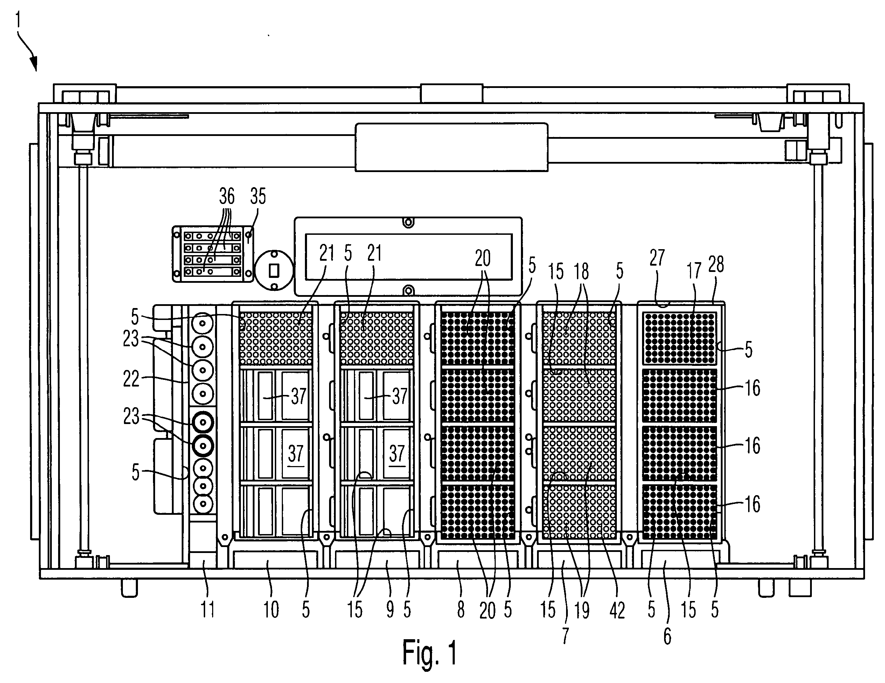

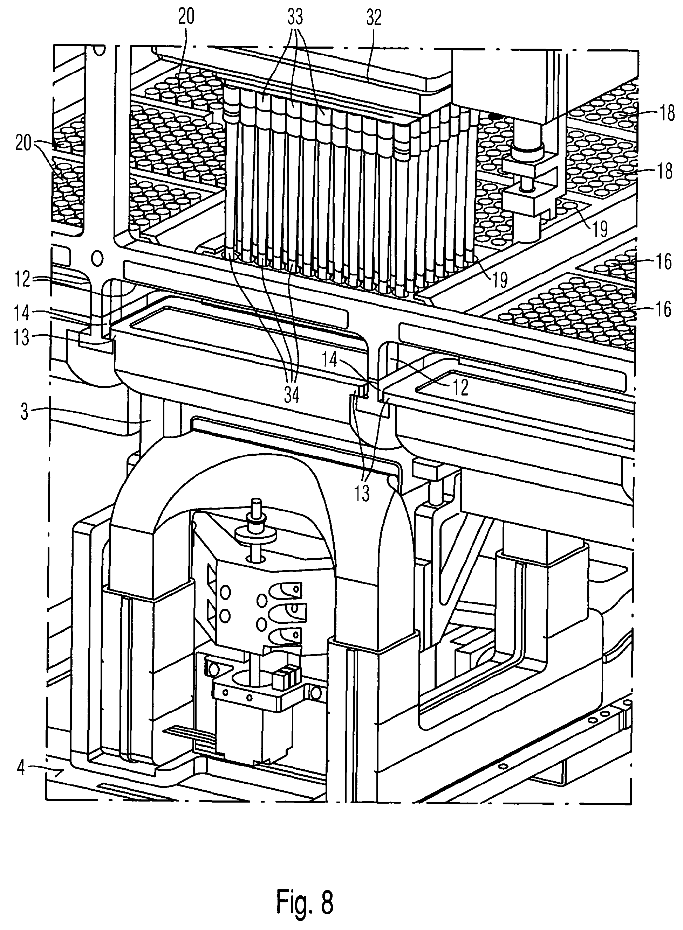

The present invention will be described in detail below with reference to the accompanying drawings, where like designations denote like or similar elements. Now referring to FIGS. 1 to 8, an exemplary embodiment of the system and method according to the invention is explained.

Accordingly, a system 1 for the parallel processing of plural nucleic acids containing samples such as nucleic acids containing cell solutions for the extraction of nucleic acids prior to further processing such as amplification is described. The system 1 includes a horizontal work-plate 2 which is supported by a substructure 3 that rests on a horizontal base plate 4 upon which the system 1 may be placed on a laboratory bench or any other suitable surface.

The work-plate 2 is provided with a plurality of rectangular recesses 5 arranged side by side with respect to each other, each of which being adapted for accommodating elongated racks 6-11. As illustrated in FIG. 1, the system 1 comprises six racks 6-11, specifically a waste rack 6, a processing rack 7, a tip rack 8, a first reagent rack 9, a second reagent rack 10 and a bottle rack 11. Each rack is provided with plural retaining sections 15, adapted for accommodating various objects such as plates and containers.

In FIG. 1, the waste rack 6 is shown to be loaded with three 96-pipette tip waste plates 16 which are serially arranged with respect to each other, each of which having a planar array of 96 cavities to receive used disposable pipette tips and a 96-well fluid waste plate 17 having a planar array of 96 wells to receive waste fluids arising in extracting the nucleic acids. The processing rack 7 is shown to be loaded with four 96-well plates serially arranged with respect to each other, which are two process plates 18, each of which having 96 process plate wells 41 to receive the nucleic acids containing samples used as starting materials for the extraction of nucleic acids and two output plates 19, each of which having 96 output plate wells 42 to receive extracted nucleic acids containing fluids. The tip rack 8 is shown to be loaded with four 96-pipette tip plates 20 serially arranged with respect to each other, which have a similar construction to the tip waste plates 16 to be pre-filled with 96 disposable pipette tips. The first and second reagent racks 9, 10 respectively are shown to be loaded with a 96-well reagent plate 21 having 96 reagent plate wells 40 to receive reagents for mixing with the nucleic acids containing samples and a plurality of reagent containers 37 containing various reagents for mixing with the samples such as lysis buffer, wash and elution solutions. The bottle rack 11 is shown to be loaded with plural bottles 23 containing suspensions of magnetically responsive particles, enzymes and control reagents. Bottles 23 containing suspensions of magnetically responsive particles may be shaken by shaker 22 for re-suspending the particles contained therein.

Each recess 5 may be accessed by a slot-like aperture 12 at a front side of the system 1 allowing the racks 6-11 to be inserted into the recesses 5 and removed therefrom, respectively. For this purpose, each rack 6-11 is provided with two lateral ribs 13 linearly extending in parallel relationship with respect to each other which, when inserting the racks 6-11 into the recesses 5, get into fitting engagement with grooves 14 formed by the work-plate 2 to slidably support the racks 6-11. Each of the racks 6-11 may be completely pulled out of its recess 5 to be charged or uncharged with plates or containers, respectively. Otherwise, each rack 6-11 can be fully inserted into its recess 5 in which position a frontal surface 28 of each of the racks 6-11 is in contact with an abutting surface 27 of the recess 5.

As above-detailed, the processing rack 7 accommodates two process plates 18 to be filled with the nucleic acids containing samples used as starting materials for the nucleic acids extraction. To this aim, the processing rack 7 is provided with two bottomless retaining sections 15 for accommodating the process plates 18 allowing the process plates 18 to be accessed from underneath for processing of the nucleic acids containing samples accommodated therein. Stated more particularly, in case the processing rack 7 is fully inserted into its recess 5, the nucleic acids containing samples contained in each of the process plates 18 may be processed for the extraction of nucleic acids by means of a heating device 24 and a magnetic field generation device (not detailed in the figures), both of which are arranged below the processing rack 7 and can be moved towards each of the process plates 18 or removed therefrom by means of a moving mechanism (not further detailed herein). The heating device 24 is provided with a planar array of projecting heating pins 25 arranged in accordance with voids formed in-between the wells 41 of an individual process plate 18 so that the heating pins 25 can dip into the voids when the heating device 24 is moved towards each of the process plates 18. Applying an electric current to the heating device 24 causes the heating pins 25 to generate Ohmic heat in order to apply thermal energy to the nucleic acids containing samples accommodated in the wells 41 of the process plates 18. Analogously, the magnetic field generation device is provided with a planar array of projecting magnetic pins, which are arranged in accordance with the voids in-between the wells of the process plates 18 so that the magnetic pins can dip into the voids when the magnetic field generation device is moved towards an individual process plate 18. The magnetic pins are made of permanent magnetic material, which when dipping into the voids in-between the wells 41 causes the nucleic acid-bound magnetically responsive particles contained therein to be drawn to and hold on the inner walls of the wells filled with the nucleic acids containing samples. Alternatively, the magnetic pins could be embodied as electromagnets which can be magnetized when applying an electric current. Both the heating and magnetic field generation devices are fixed to a carrier 26 in opposite relationship to each other. The carrier 26 is rotatably driven around rotational axis so that the heating and magnetic field generation devices may alternatively either face an individual process plate 18 or can be turned away therefrom. Combining turning operation of the carrier 26 with translational movement thereof, the heating and magnetic field generation devices may be moved into an operative and inoperative position, respectively, with respect to an individual process plate 18, wherein when in operative position, the heating or magnetic pins can dip into the voids of the wells 41 of an individual process plate 18 for processing of the nucleic acids containing samples accommodated therein. For example, starting with the heating device 24 in operative position, the magnetic device can be moved into operative position vertically lowering the carrier 26, turning it by 180°, followed by vertically lifting it towards the process plate 18.

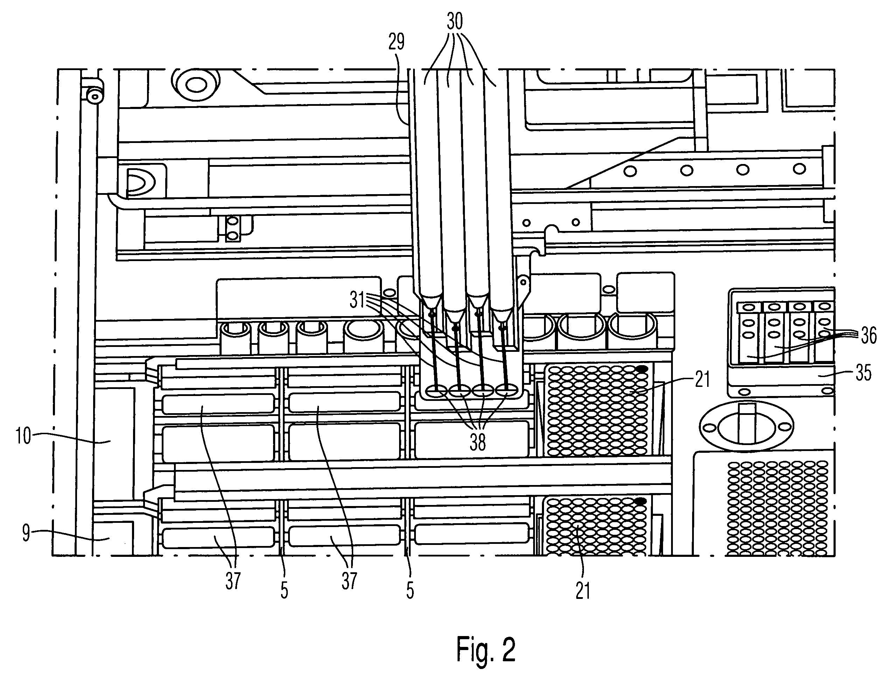

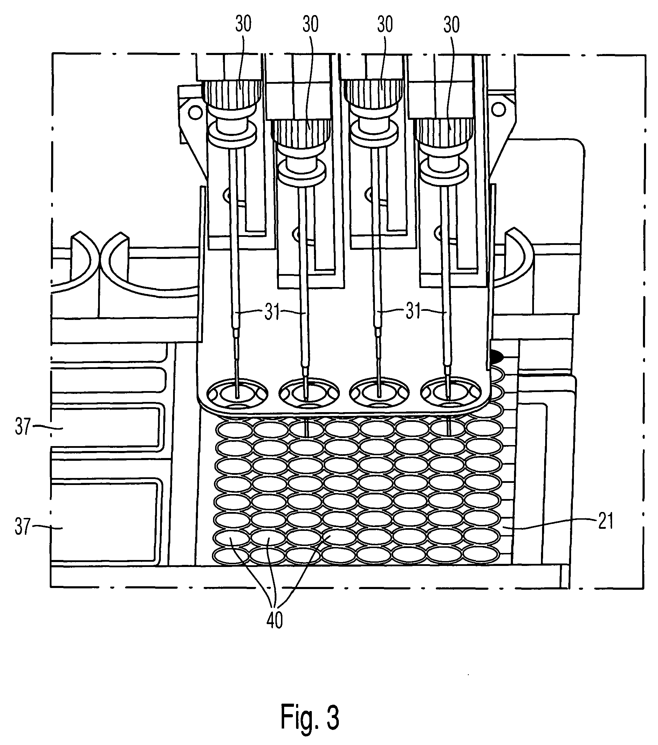

As illustrated in FIGS. 2 and 3, the system 1 further includes a reagent pipettor 29 (multi-pipetting device) provided with four reagent pipettes 30 which are serially arranged with respect to each other and adapted to transfer reagents to each of the reagent plates 21. Each reagent pipette 30 is provided with a re-usable pipette tip 31 made of steel and fixedly secured to the reagent pipette 30.

A washing device 35 comprising four washing cavities 36 which may be filled with washing fluid (e.g. liquid system fluid of the reagent pipettor 29) by the reagent pipettes 30 can be used for washing the re-usable pipette tips 31 in-between consecutive pipetting operations. The washing cavities 36 are serially arranged with respect to each other in accordance with an inter-distance of the re-usable pipette tips 31.

Based on a reagent pipettor positioning system (not further detailed herein), the reagent pipettor 29 may be moved within a range of movement covering an area including the bottle rack 11, the first and second reagent racks 9, 10 and the washing device 35, but not including the tip rack 8, the processing rack 7 and the waste rack 6. The reagent pipettor positioning system has components of movement in two directions of travel in a plane and a third direction of travel vertical thereto such as a conventional three-beam translation system.

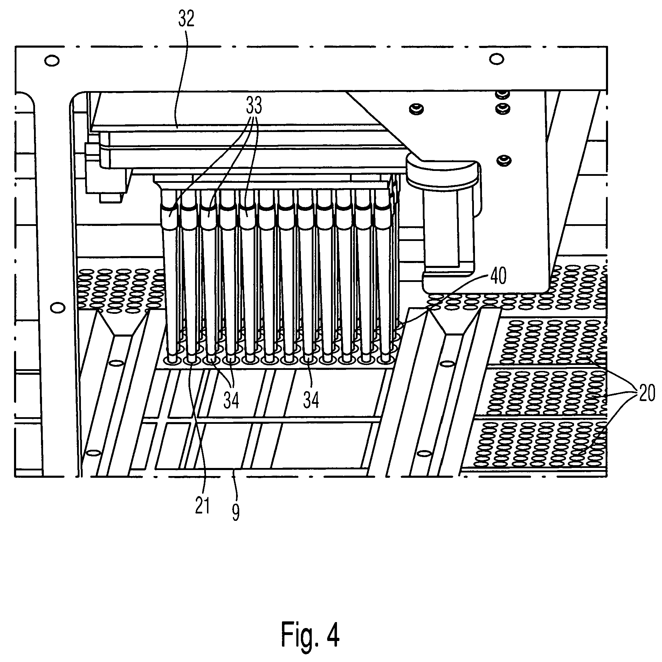

As illustrated in FIGS. 4 through 8, the system 1 further includes a sample pipettor 32 (multi-pipetting device) which is provided with 96 sample pipettes 33 arranged in an array, adapted to transfer fluids to or from each of the reagent plates 21, the process plates 18 and the output plates 19. Based on a sample pipettor positioning system (not further detailed herein), the sample pipettor 32 may be moved within a range of movement covering an area including the first and second reagent racks 9, 10, the tip rack 8, the processing rack 7 and the waste rack 6, but not including the bottle rack 11. The sample pipettor positioning system has components of movement in two directions of travel in a plane and a third direction of travel vertical thereto such as a conventional three-beam translation system.

Thus, the reagent and sample pipettors have ranges of movements which overlap at an area exclusively including the first and second reagent racks 9, 10.

Each sample pipette 33 is provided with a disposable pipette tip 34 made of plastic material which is frictionally engaged with the sample pipette 33 to be detachably fixed thereto. Basically, coupling between pipette tips and pipettes is well-known to those of skill in the art, and, for instance, is disclosed in European patent specification No. 1171240.

The system 1 yet further comprises a controller (not shown in the figures) for controlling of the automated extraction of nucleic acids according to a predetermined process operation plan which, for instance, may be embodied as a programmable logic controller running a computer-readable program provided with instructions to perform operations in accordance with the process operation plan.

While specific numbers of plates and fluid containers are shown in the figures, it is to be understood that the number of these components may vary in accordance with specific needs for the extraction of nucleic acids. Instead of 96-well plates and 96-pipette tip plates as shown to be loaded onto the racks, differently sized plates such as 48-well plates and 48-pipette tip plates may alternatively be used in accordance with specific needs for the extraction of nucleic acids.

Referring to FIG. 2 through 8, an exemplary embodiment of the method for extracting nucleic acids using the system 1 is explained.

The process starts with providing a plurality of nucleic acids containing samples (e.g. cell solutions) which are directly filled into one or both of the process plates 18 to be used as starting materials for the nucleic acids extraction (which is not detailed in the figures). Each process plate 18 may be manually or automatically pre-filled with the nucleic acids containing samples and can then be loaded onto the processing rack 7 or may alternatively be filled with the samples when the processing rack 7 has already been placed in operative position. For the following it is assumed that 96 process plate wells 41 of only one process plate 18 are being manually pre-filled with the nucleic acids containing samples.

As illustrated in FIGS. 2 and 3, lysis buffer contained in fluid containers 37 is transferred to one (or alternatively both) of the reagent plates 21 using the reagent pipettor 29. Stated more particularly, placing the re-usable pipette tips 31 above an reagent container 37 containing four separate reagent compartments, the re-usable pipette tips 31 made of steel are moved in vertical downward directions to penetrate through metallic foils of each of the compartments of the reagent container 37 to dip into the reagent contained therein to suck the reagent and transferring it to reagent plate wells 40 of the reagent plate 21 which is repeated as often as necessary until a number of 96 reagents in the reagent plate 21 has been obtained. More specifically, when performing a single pipetting operation, reagents may be transferred in parallel to four wells 40 of the reagent plate 21 so that 1 up to 24 pipetting operations have to be performed providing for 96 reagents using the (same) re-usable pipette tips 31 of the reagent pipettor 29. It, however, has to be understood that the instrument may be operable with less than 96 samples and therefore less pipetting operations would be sufficient to add reagent to the samples.

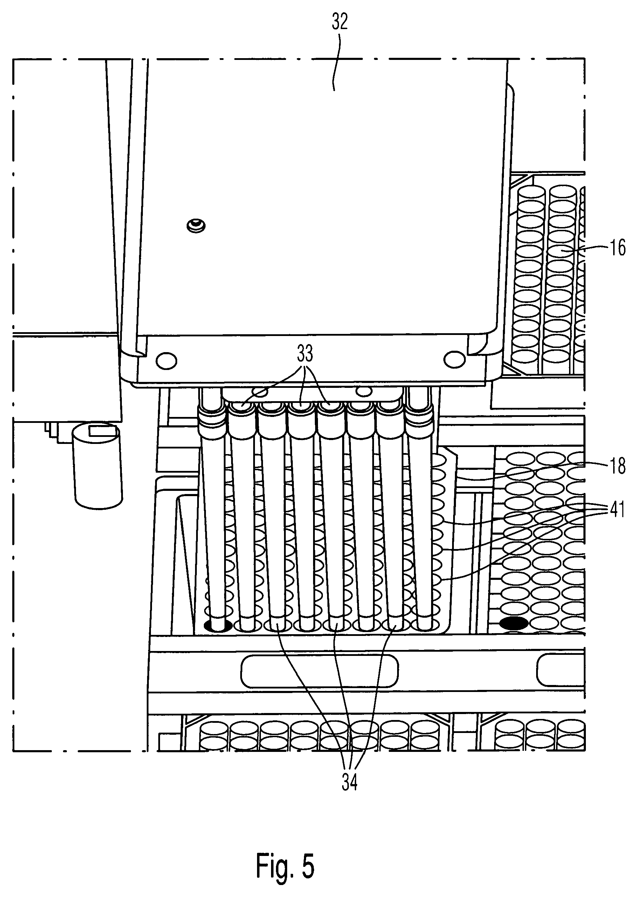

As illustrated in FIGS. 4 and 5, using the disposable pipette tips 34 of the sample pipettor 32, the reagents (lysis buffer) which have been transferred into in the reagent plate 21 are simultaneously transferred in parallel from the reagent plate wells 40 to the sample-filled process plate wells 41 of the process plate 18. As specified in the process operation plan, reagent contained in a reagent plate well 40 which is assigned one-to-one to a nucleic acids containing sample is transferred to that sample using a disposable pipette tip 34 assigned one-to-one to that sample (this one-to-one assignment also means that one cavity of the reagent plate is assigned one-to-one to a cavity of the process plate). Hence, 96 disposable pipette tips 34 are used for transferring the 96 reagents to the 96 nucleic acids containing samples in parallel.

Then, the reagents (lysis buffer) are mixed with the samples performing one or more sip-and-spit operations using the same disposable pipette tips 34 with the disposable pipette tips 34 being used for both transferring the reagents and mixing the transferred reagents with the samples.

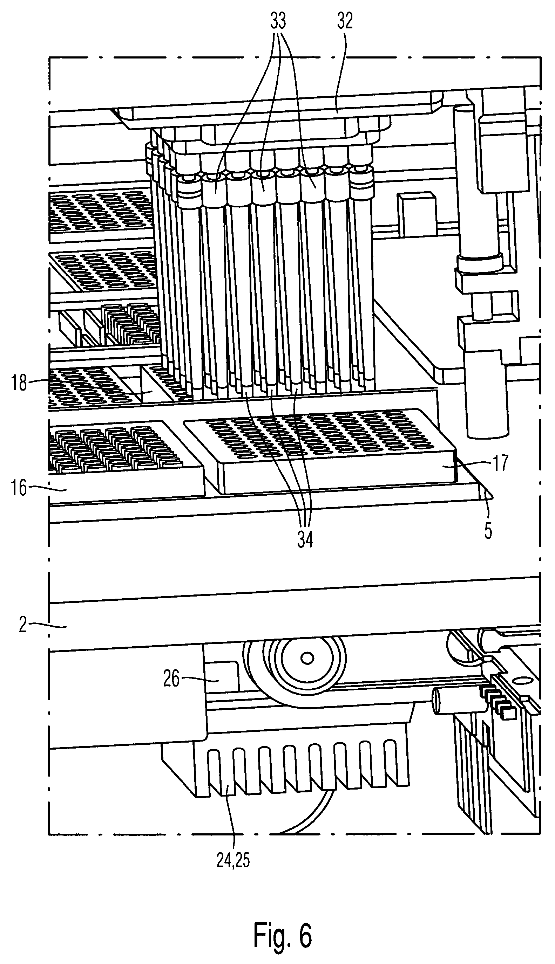

As illustrated in FIG. 6, the sample-reagent mixtures obtained then are processed for releasing the nucleic acids contained therein. Firstly, incubating the cells, the heating device 24 is moved towards the process plate 18 containing the sample-reagent mixtures, so that the heating pins 25 can dip into the voids in-between the process plate wells 41. Applying an electric current to the heating device 24, Ohmic heat is generated and conductively transferred to the samples for incubating the cells to make them burst and release the nucleic acids into the surrounding medium. The process plate 18 preferably is kept stationary during incubation of the cells.

After the lysis buffer has been removed from the reagent plate, suspensions of magnetically responsive particles from bottles 23, which have been freshly shaken by shaker 22 to re-suspend the particles contained therein, are transferred to the reagent plate wells 40 by the re-usable pipetting tips 31 of the reagent pipettor 29. The magnetically responsive particles containing suspensions are then transferred from the reagent plate wells 40 to the process plate wells 41 via disposable tips. For taking up these suspensions, particles which eventually might have sedimented are re-suspended by sip-and-spit operations with the disposable tips. The magnetically responsive particles contained in the sample-reagent mixtures (e.g. magnetic glass particles which have a glass surface and a magnetically responsive core) bind to the released nucleic acids to thereby obtain nucleic acid-bound magnetically responsive particles.

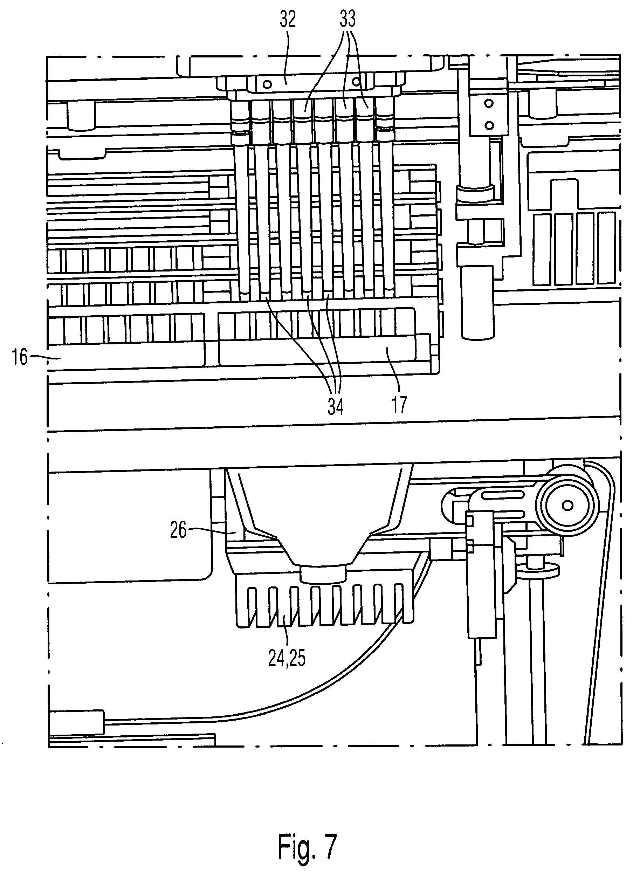

Following binding of magnetically responsive particles with nucleic acids, a magnetic separation step including manipulation of the molecule-bound magnetic particles is performed in which the magnetic field generation device (not illustrated) is moved towards the process plate 18, so that the magnetic pins can dip into the voids in-between the process plate wells 41 of the process plate 18 to thereby apply magnetic fields which cause the molecule-bound magnetic particles to be drawn to and hold on the inner walls of the wells. Holding the molecule-bound magnetic particles on the inner walls of the wells, supernatant fluids (waste fluids) of the samples can be aspired and dispensed into the waste plate 17 of the waste rack 6 using the disposable pipette tips 34 as illustrated in FIG. 7.

Following removal of the supernatant fluids, at least another washing step including manipulation of the molecule-bound magnetic particles is performed. Wash buffer is transferred from the fluid containers 37 to the reagent plate wells 40 by re-usable pipetting tips 31 of the reagent pipettor 29. The wash buffer is then transferred from the reagent plate wells 40 to the process plate wells 41 using the disposable pipette tips 34. Each time fresh wash solution is transferred into the process plate wells 41, the magnetic field is removed and the molecule-bound magnetically responsive particles are re-suspended in the wash buffer. Re-suspension can be made by sip-and-spit operations with the wash solution in the process plate. Supernatant fluids are then removed after applying a magnetic field to separate the magnetic particles.

Elution buffer which has been transferred to the reagent plate wells 40 by the re-usable pipetting tips 31 of the reagent pipettor 29, is transferred from the reagent plate wells 40 to the process plate wells 41 using the disposable pipette tips 34. Then, the nucleic acids are made to detach from the magnetically responsive particles by elution buffer. The magnetically responsive particles are separated again by applying the magnetic field and the supernatant fluid containing the extracted nucleic acids is aspirated by disposable tips and dispensed into the output plate. Fresh disposable pipette tips 34 are preferably used to thereby obtain pure extracted nucleic acids containing fluids. Each one of the separated nucleic acids containing fluids (i.e. the supernatant fluids) is assigned one-to-one both to a cavity of the output plate and a disposable pipette tip 34. The separated nucleic acids containing fluids may be used for further processing or analyzing the nucleic acids, such as nucleic acids amplification.

The process plate 18 is preferably kept stationary during and in-between incubation and magnetic separation steps.

In above pipetting operations using disposable pipette tips 34 of the sample pipettor 32, an one-to-one assignment between the nucleic acids containing samples (i.e. process plate wells 41) and both the output plate wells 42 and the disposable pipette tips 34 used for the pipetting operations of various reagents is kept.

The re-usable pipette tips 31 of the reagent pipettor 29 may be washed in-between pipetting of a same or differing reagents prior to transferring reagents from fluid containers 37 and bottles 23, respectively, to the output plate wells 42 of the reagent plate 21 using the washing device 35. Washing of the re-usable pipetting tips 31 may be performed in vertically lowering the re-usable pipette tips 31 towards the washing cavities 36, spitting liquid system fluid into the containers until the re-usable pipetting tips 31 dip into the liquid system fluid to wash their outer surface as well.

Hence,
(a) providing the reagents in a dedicated reagent plate 21 using the re-usable pipette tips 31,
(b) transferring the reagents to the nucleic acids containing samples provided in the process plate 18 using the disposable pipette tips 34,
(c) performing the nucleic acids release and magnetic separation operations in the process plate 18 using the same disposable pipette tips 34, while keeping a one-to-one assignment between the samples (i.e. process plate wells 41) and both the wells of the reagent plate and disposable pipette tips 34, and
(d) transferring the extracted nucleic acids to output plate wells 42 of the output plate 19 using the same or fresh disposable pipetting tips 34, while keeping a one-to-one assignment between the process plate wells 41 and both the output plate wells 42 and the disposable pipette tips 34,
a comparably low consumption of disposables per single nucleic acids extraction run without an enlarged risk of carry-over of substances and cross-contamination of samples due to separate sample process channels for each of the samples can be achieved. Furthermore keeping the process plate 18 stationary during and in-between incubation and magnetic separation steps advantageously reduces a risk of contamination and/or spilling of the samples when extraction of nucleic acids is performed.

Obviously many modifications and variations of the present invention are possible in light of the above description. It is therefore to be understood, that within the scope of appended claims, the invention may be practiced otherwise than as specifically devised.

### Reference list

- 1: System
- 2: Work-plate
- 3: Substructure
- 4: Base plate
- 5: Recess
- 6: Waste Rack
- 7: Processing rack
- 8: Tip rack
- 9: First reagent rack
- 10: Second reagent rack
- 11: Bottle rack
- 12: Aperture
- 13: Rib
- 14: Groove
- 15: Retaining section
- 16: Tip waste plate
- 17: Fluid waste plate
- 18: Process plate
- 19: Output plate
- 20: Tip plate
- 21: Reagent plate
- 22: Shaker
- 23: Bottle
- 24: Heating device
- 25: Heating pin
- 26: Carrier
- 27: Abutting surface
- 28: Frontal surface
- 29: Reagent pipettor
- 30: Reagent pipette
- 31: Re-usable pipette tip
- 32: Sample pipettor
- 33: Sample pipette
- 34: Disposable pipette tip
- 35: Washing device
- 36: Washing cavity
- 37: Fluid container
- 38: Container cap
- 39: Bottle cap
- 40: Reagent plate well
- 41: Process plate well
- 42: Output plate well

## Claims

1. A system (1) for the automated extraction of nucleic acids from nucleic acids containing samples, comprising at least one set of three plates (18, 19, 21), each of which having plural cavities (40-42), including a process plate (18) for processing said nucleic acids, a reagent plate (21) for providing reagents for mixing with said samples and an output plate (19) for outputting said extracted nucleic acids, wherein said samples are contained in cavities (41) of said process plate (18), comprising:
a reagent pipetting device (29) comprising a plurality of reagent pipettes (30) provided with re-usable pipette tips (31) repeatedly used for providing said reagents in said cavities (40) of said reagent plate (21), wherein the re-usable pipette tips (31) are fixedly secured to the reagent pipettes (30) and are made of a metallic material;
a sample pipetting device (32) comprising a plurality of sample pipettes (33) provided with disposable pipette tips (34) for pipetting of said reagents from said cavities (40) of said reagent plate (21) to said samples contained in said cavities (41) of said process plate (18) to obtain sample-reagent mixtures and for transferring extracted nucleic acids containing fluids from said cavities (41) of said process plate (18) to said cavities (42) of said output plate (19),
an incubating device (24, 25) for incubating said sample-reagent mixtures in said cavities (41) of said process plate (18) to release the nucleic acids;
a separating device for separating said released nucleic acids in said cavities (41) of said process plate (18) to obtain said extracted nucleic acids containing fluids;
a controller for controlling steps to extract nucleic acids from said nucleic acids containing samples, configured to control: repeatedly using the re-usable pipette tips (31) of the reagent pipetting device (29) for providing reagents in cavities (40) of said reagent plate (21) ; transferring the reagents to the samples using the disposable pipette tips (34) of the sample pipetting device (32) to obtain sample-reagent mixtures; incubating the sample-reagent mixtures in cavities (41) of the process plate (18) using the incubating device (24, 25) to release the nucleic acids to obtain released nucleic acids containing fluids; separating the released nucleic acids contained in the released nucleic acids containing fluids in cavities (41) of the process plate (18) using the separating device to obtain extracted nucleic acids containing fluids; and transferring the extracted nucleic acids containing fluids to cavities (42) of the output plate (19) using the disposable pipette tips (34) of the sample pipetting device (32);
wherein the number of cavities (41) containing said samples is equal to the number of cavities (40) containing said reagents, wherein each of said samples is assigned one-to-one to a cavity (40) of said reagent plate (21), at least one disposable pipette tip (34) and a cavity (42) of said output plate (19).

2. The system (1) according to claim 1, further comprising a washing device (35), adapted for washing of the re-usable pipetting tips (31).

3. The system (1) according to any one of the preceding claims 1 to 2, comprising at least one holder (6-11) for supporting of the plates (18, 19, 21), the holder being movable between at least an inoperative holder position, adapted for loading or unloading the plates, and an operative holder position adapted for extraction of the nucleic acids.

4. The system (1) according to any one of the preceding claims 1 to 3, further comprising at least one fluid waste plate (17) having plural cavities to receive waste fluids arising in extracting the nucleic acids.

5. The system (1) according to any one of the preceding claims 1 to 4, further comprising at least one tip waste plate (16) having plural cavities to receive used pipette tips (34) arising in extracting the nucleic acids.

6. The system (1) according to any one of the preceding claims 1 to 5, further comprising at least one tip plate (20) having a plurality of cavities to be filled with used disposable pipette tips (34) arising in extracting the nucleic acids.

7. A process for the automated extraction of nucleic acids from nucleic acids containing samples using a system according to claim 1, comprising the following steps of:
providing said samples in cavities (41) of a process plate (18) ;
repeatedly using re-usable pipette tips (31) for providing reagents for reacting with said samples in cavities (40) of a reagent plate (21);
transferring said reagents to said samples using disposable pipette tips (34), wherein each of said samples is assigned one-to-one both to a cavity (40) of said reagent plate (21) and a disposable pipette tip (34) to obtain sample-reagent mixtures;
incubating the sample-reagent mixtures accommodated in the process plate (18) to release the nucleic acids;
separating said released nucleic acids accommodated in the process plate (18) to obtain extracted nucleic acids containing fluids;
transferring said extracted nucleic acids containing fluids to cavities (42) of an output plate (19) using disposable pipette tips (34), wherein each of the extracted nucleic acids containing fluids is assigned one-to-one both to a cavity of the output plate (19) and a disposable pipette tip (34).

8. The process of claim 7, wherein, for each one of the samples, one disposable pipette tip (34) is used for transferring a reagent to the sample and for transferring the extracted nucleic acids containing fluid obtained therefrom to a cavity (42) of said output plate (19).

9. The process of claim 7, wherein, for each one of the samples, one disposable pipette tip (34) is used for transferring a reagent to the sample and another disposable pipette tip (34) is used for transferring the extracted nucleic acids containing fluid obtained therefrom to a cavity (42) of said output plate (19).

10. The process according to any one of the preceding claims 7 to 9, wherein said re-usable pipette tips (31) are washed in-between consecutive pipetting operations.

11. The process according to any one of the preceding claims 7 to 10, wherein said disposable pipette tips (34) are used to transfer waste fluid arising in extracting the nucleic acids to cavities of a fluid waste plate (17).

12. The process according to any one of the preceding claims 7 to 11, wherein used disposable pipette tips (34) arising in extracting the nucleic acids are stored in cavities of a tip waste plate (16).

13. The process according to any one of the preceding claims 7 to 12, wherein said process plate (18) is kept stationary during and in-between releasing and separating the nucleic acids.

14. The process according to any one of the preceding claims 7 to 13, wherein said re-usable pipette tips (31) are moved in a first range of movements and said disposable pipette tips (34) are moved in a second range of movements, said first and second range of movements exclusively overlapping at a reagent plate (21) containing area containing said reagent plate (21).

## Patentansprüche

1. System (1) zur automatischen Extraktion von Nukleinsäure aus Nukleinsäure-haltigen Proben, das zumindest eine Gruppe von drei Platten (18, 19, 21) umfasst, wovon jede eine Mehrzahl von Aussparungen (40-42) aufweist, die eine Prozessierungs-Platte (18) zum Prozessieren der Nukleinsäuren, eine Reagenzien-Platte (21) zum Bereitstellen von Reagenzien zum Mischen mit den Proben und eine Ausgabe-Platte (19) zur Ausgabe der extrahierten Nukleinsäuren beinhalten, wobei die Proben in den Aussparungen (41) der Prozessierungs-Platte (18) enthalten sind, umfassend:
eine Reagenzien-Pipettierungsvorrichtung (29), die eine Mehrzahl von Reagenzien-Pipetten (30) umfasst, die mit wiederverwendbaren Pipetten-Spitzen (31) versehen sind, die wiederholt zum Bereitstellen der Reagenzien in die Aussparungen (40) der Reagenzien-Platte (21) verwendet werden, wobei die wiederverwendbaren Pipetten-Spitzen (31) fest an den Reagenzien-Pipetten (30) angebracht sind und aus einem metallischen Material hergestellt sind;
eine Proben-Pipettierungsvorrichtung (32), die eine Mehrzahl von Proben-Pipetten (33) umfasst, die mit Einweg-Pipetten-Spitzen (34) versehen sind zum Pipettieren der Reagenzien von den Aussparungen (40) der Reagenzien-Platte (21) zu den Proben, die in den Aussparungen (41) der Prozessierungs-Platte (18), um Proben-Reagenzien-Mixturen zu erhalten und zum Transferieren von Flüssigkeiten, die extrahierte Nukleinsäuren enthalten, aus den Aussparungen (41) der Prozessierungs-Platte (18) in die Aussparungen (42) der Ausgabeplatte (19),
eine Inkubator-Vorrichtung (24, 25) zum Inkubieren der Proben-Reagenzien-Mixturen in den Aussparungen (41) der Prozessierungs-Platte (18), um die Nukleinsäuren freizusetzen;
eine Trennvorrichtung zum Trennen der freigesetzten Nukleinsäuren in den Aussparungen (41) der Prozessierungs-Platte (18), um Flüssigkeiten zu erhalten, die die extrahierten Nukleinsäuren enthalten;
eine Steuerung zum Steuern der Schritte des Extrahierens der Nukleinsäuren aus den Nukleinsäure-haltigen Proben, ausgelegt zum Steuern von:
wiederholtem Benutzen der wiederverwendbaren Pipetten-Spitzen (31) der Reagenzien-Pipettierungsvorrichtung (29) zum Zuführen von Reagenzien in Aussparungen (40) der Reagenzien-Platte (21);
Transferieren der Reagenzien zu den Proben unter Benutzung der Einweg-Pipetten-Spitzen (34) der Proben-Pipettierungsvorrichtung (32), um Proben-Reagenzien-Mixturen zu erhalten; Inkubieren der Proben-Reagenzien-Mixturen in Aussparungen (41) der Prozessierungs-Platte (18) unter Benutzung der Inkubierungs-Vorrichtung (24, 25), um die Nukleinsäuren freizusetzen um Flüssigkeiten zu erhalten, die freigesetzte Nukleinsäuren beinhalten; Trennen der freigesetzten Nukleinsäuren, die in den Flüssigkeiten enthalten sind, die freigesetzte Nukleinsäuren beinhalten in Aussparungen (41) der Prozessierungs-Platte (18) unter Benutzung der Trennungs-Vorrichtung, um Flüssigkeiten zu erhalten, die extrahierte Nukleinsäuren enthalten; und Transferieren der Flüssigkeiten, die extrahierte Nukleinsäuren enthalten, zu Aussparungen (42) der Ausgabe-Platte (19) unter Benutzung der Einweg-Pipetten-Spitzen (34) der Proben-Pipettierungsvorrichtung (32);
wobei die Anzahl von Aussparungen (41), die die Proben enthalten gleich der Anzahl von Aussparungen (40), die die Reagenzien enthalten ist, wobei jeder der Proben eins-zu-eins eine Aussparung (40) der Reagenzien-Platte (21), zumindest eine Einweg-Pipetten-Spitze (34) und eine Aussprung (42) der Ausgabe-Platte (19) zugeordnet ist.

2. System (1) gemäß Anspruch 1, das weiter eine Wasch-Vorrichtung (35) umfasst, die angepasst ist, um die wiederverwendbaren Pipetten-Spitzen (31) zu waschen.

3. System (1) gemäß irgendeinem der vorangehenden Ansprüche 1 bis 2, das zumindest einen Halter (6-11) umfasst, um die Platten (18, 19, 21) zu stützen, wobei der Halter beweglich ist zwischen zumindest einer nicht operativen Halter-Position, angepasst zum Laden oder Entladen der Platten und einer operativen Halter-Position, angepasst zum Extrahieren der Nukleinsäuren.

4. System (1) gemäß irgendeinem der vorangehenden Ansprüche 1 bis 3, das weiterhin zumindest eine Abfallflüssigkeits-Platte (17) umfasst, die eine Mehrzahl von Aussparungen aufweist, um Abfallflüssigkeiten zu empfangen, die beim Extrahieren der Nukleinsäuren anfallen.

5. System (1) gemäß irgendeinem der vorangehenden Ansprüche 1 bis 4, das weiterhin zumindest eine Abfallspitzen-Platte (16) umfasst, die eine Mehrzahl von Aussparungen aufweist, um benutzte Pipetten-Spitzen (34) zu empfangen, die beim Extrahieren der Nukleinsäuren anfallen.

6. System (1) gemäß irgendeinem der vorangehenden Ansprüche 1 bis 5, das weiterhin zumindest eine Spitzen-Platte (20) umfasst, die eine Mehrzahl von Aussparungen aufweist, die mit benutzen Einweg-Pipetten-Spitzen (34) gefüllt werden können, die beim Extrahieren der Nukleinsäuren anfallen.

7. Verfahren zur automatischen Extraktion von Nukleinsäure aus Nukleinsäure-haltigen Proben unter Benutzung eines Systems gemäß Anspruch 1, umfassend die folgenden Schritte:
Bereitstellen der Proben in Aussparungen (41) einer Prozessierungs-Platte (18);
wiederholtes Benutzen wiederverwendbarer Pipetten-Spitzen (31) zum Zuführen von Reagenzien zum Reagieren mit den Proben in Aussparungen (40) einer Reagenzien-Platte (21);
Transferieren der Reagenzien zu den Proben unter Benutzung von Einweg-Pipetten-Spitzen (34), wobei jede der Proben eins-zu-eins einer Aussparung (40) der Reagenzien-Platte (21) und einer Einweg-Pipetten-Spitze (34) zugeordnet ist, um Proben-Reagenzien-Mixturen zu erhalten;
Inkubieren der Proben-Reagenzien-Mixturen, die in der Prozessierungs-Platte (18) beherbergt sind, um die Nukleinsäuren freizusetzen;
Trennen der freigesetzten Nukleinsäuren, die in der Prozessierungs-Platte (18) beherbergt sind, um Flüssigkeiten zu erhalten, die freigesetzte Nukleinsäuren beinhalten;
Transferieren der Flüssigkeiten, die freigesetzte Nukleinsäuren beinhalten, zu Aussparungen (42) einer Ausgabe-Platte (19) unter Benutzung von Einweg-Pipetten-Spitzen (34), wobei jede der Flüssigkeiten, die freigesetzte Nukleinsäuren beinhalten, eins-zu-eins sowohl einer Aussparung (42) der Ausgabe-Platte (19) als auch einer Einweg-Pipetten-Spitzen (34) zugeordnet ist.

8. Verfahren gemäß Anspruch 7, wobei eine Einweg-Pipetten-Spitzen (34) für jede der Proben benutzt wird zum Transferieren einer Reagenz zu der Probe und zum Transferieren der Flüssigkeit, die daraus extrahierte Nukleinsäuren enthält zu einer Aussparung (42) der Ausgabe-Platte (19).

9. Verfahren gemäß Anspruch 7, wobei eine Einweg-Pipetten-Spitzen (34) für jede der Proben benutzt wird zum Transferieren einer Reagenz zu der Probe und eine andere Einweg-Pipetten-Spitzen (34) zum Transferieren der Flüssigkeit, die daraus extrahierte Nukleinsäuren enthält zu einer Aussparung (42) der Ausgabe-Platte (19) benutzt wird.

10. Verfahren gemäß irgendeinem der vorangehenden Ansprüche 7 bis 9, wobei die wiederverwendbaren Pipetten-Spitzen (31) zwischen aufeinander folgenden Pipettiervorgängen gewaschen werden.

11. Verfahren gemäß irgendeinem der vorangehenden Ansprüche 7 bis 10, wobei die Einweg-Pipetten-Spitzen (34) benutzt werden, um Abfallflüssigkeiten zu transferieren, die beim Extrahieren der Nukleinsäuren anfallen, zu Aussparungen einer Abfallflüssigkeits-Platte (17).

12. Verfahren gemäß irgendeinem der vorangehenden Ansprüche 7 bis 11, wobei benutzte Einweg-Pipetten-Spitzen (34), die beim Extrahieren der Nukleinsäuren anfallen, in Aussparungen einer Abfallspitzen-Platte (16) gelagert werden.

13. Verfahren gemäß irgendeinem der vorangehenden Ansprüche 7 bis 12, wobei die Prozessierungs-Platte (18) während und zwischen Freisetzen und Trennen der Nukleinsäuren stationär gehalten wird.

14. Verfahren gemäß irgendeinem der vorangehenden Ansprüche 7 bis 13, wobei die wiederverwendbaren Pipetten-Spitzen (31) in einem ersten Bewegungsbereich bewegt werden und wobei die Einweg-Pipetten-Spitzen (34) in einem zweiten Bewegungsbereich bewegt werden, wobei der erste und der zweite Bewegungsbereich ausschließlich in einem Bereich überlappen, der die Reagenzien-Platte (21) beinhaltet.

## Revendications

1. Système (1) pour l'extraction automatisée d'acides nucléiques d'échantillons contenant des acides nucléiques, comprenant au moins un jeu de trois portoirs (18, 19, 21), chacun d'eux comportant une pluralité de cavités (40-42), y compris un portoir (18) de traitement pour traiter lesdits acides nucléiques, un portoir (21) de réactif pour fournir des réactifs à mélanger avec lesdits échantillons et un portoir (19) de sortie pour sortir lesdits acides nucléiques extraits, dans lequel lesdits échantillons sont contenus dans des cavités (41) dudit portoir (18) de traitement, comprenant :
un dispositif (29) pour pipeter des réactifs, comprenant une pluralité de pipettes à réactif (30) pourvues d'embout (31) réutilisable de pipette utilisées à plusieurs reprises pour fournir lesdits réactifs dans lesdites cavités (40) dudit portoir (21) de réactif, dans lequel les embouts (31) réutilisables de pipette sont fixés à demeure aux pipettes à réactif (30) et sont faits d'une matière métallique ;
un dispositif (32) pour pipeter des échantillons, comprenant une pluralité de pipettes à échantillon (33) pourvues d'embout (34) jetable de pipette pour pipeter lesdits réactifs desdites cavités (40) dudit portoir (21) de réactif auxdits échantillons contenus dans lesdites cavités (41) dudit portoir (18) de traitement pour obtenir des mélanges échantillon-réactif et pour transférer les fluides contenant des acides nucléiques extraits desdites cavités (41) dudit portoir (18) de traitement auxdites cavités (42) dudit portoir (19) de sortie ;
un dispositif d'incubation (24, 25) pour incuber lesdits mélanges échantillon-réactif dans lesdites cavités (41) dudit portoir (18) de traitement afin de libérer les acides nucléiques ;
un dispositif de prélèvement pour séparer lesdits acides nucléiques libérés dans lesdites cavités (41) dudit portoir (18) de traitement afin d'obtenir lesdits fluides contenant les acides nucléiques extraits ;
un dispositif de commande pour commander les étapes d'extraction des acides nucléiques des échantillons contenant lesdits acides nucléiques, configuré pour commander les étapes consistant à : utiliser de façon répétée les embouts (31) réutilisables de pipette du dispositif (29) pour pipeter des réactifs pour fournir des réactifs dans les cavités (40) dudit portoir (21) de réactif ; transférer les réactifs aux échantillons au moyen des embouts (34) jetables de pipette du dispositif (32) pour pipeter des échantillons pour obtenir des mélanges échantillon-réactif ; incuber les mélanges échantillon-réactif dans les cavités (41) du portoir (18) de traitement au moyen du dispositif d'incubation (24, 25) pour libérer les acides nucléiques afin d'obtenir des fluides contenant les acides nucléiques libérés ; séparer les acides nucléiques libérés contenus dans les fluides contenant les acides nucléiques libérés dans les cavités (41) du portoir (18) de traitement au moyen du dispositif de prélèvement pour obtenir des fluides contenant les acides nucléiques extraits ; et transférer les fluides contenant les acides nucléiques extraits dans les cavités (42) dudit portoir (19) de sortie au moyen des embouts (34) jetables de pipette du dispositif (32) pour pipeter les échantillons,
dans lequel le nombre de cavités (41) contenant lesdits échantillons est égal au nombre de cavités (40) contenant lesdits réactifs, dans lequel chacun desdits échantillons est assigné un pour un à une cavité (40) dudit portoir (21) de réactif, à au moins un embout (34) jetable de pipette et à une cavité (42) dudit portoir (19) de sortie.

2. Système (1) selon la revendication 1, comprenant en outre un dispositif de lavage (35), apte à laver les embouts (31) réutilisables de pipette.

3. Système (1) selon la revendication 1 ou 2, comprenant au moins un support (6-11) pour soutenir les portoirs (18, 19, 21), le support étant mobile entre au moins une position inactive de support, conçue pour charger et décharger les portoirs, et une position active de support, conçue pour extraire les acides nucléiques.

4. Système (1) selon l'une quelconque des revendications 1 à 3, comprenant en outre au moins un portoir (17) de résidus fluides comportant de multiples cavités pour recevoir les déchets fluides survenant dans l'extraction des acides nucléiques.

5. Système (1) selon l'une quelconque des revendications 1 à 4, comprenant en outre au moins un portoir (16) de déchets d'embout comportant de multiples cavités pour recevoir les embouts (34) de pipette usagés résultant de l'extraction des acides nucléiques.

6. Système (1) selon l'une quelconque des revendications 1 à 5, comprenant en outre au moins un portoir (20) d'embouts comportant une pluralité de cavités à remplir avec les embouts (34) jetables de pipette usagés résultant de l'extraction des acides nucléiques.

7. Procédé pour l'extraction automatisée d'acides nucléiques d'échantillons contenant des acides nucléiques au moyen d'un système selon la revendication 1, comprenant les étapes consistant à :
disposer lesdits échantillons dans les cavités (41) d'un portoir (18) de traitement ;
utiliser de façon répétée des embouts (31) réutilisables de pipette pour fournir des réactifs afin qu'ils réagissent avec lesdits échantillons dans les cavités (40) d'un portoir (21) de réactif ;
transférer lesdits réactifs auxdits échantillons au moyen d'embouts (34) jetables de pipette, chacun desdits échantillons étant assigné un pour un à la fois à une cavité (40) dudit portoir (21) de réactif et à un embout (34) jetable de pipette pour obtenir des mélanges échantillon-réactif ;
incuber les mélanges échantillon-réactif logés dans le portoir (18) de traitement pour libérer les acides nucléiques ;
séparer lesdits acides nucléiques libérés logés dans ledit portoir (18) de traitement pour obtenir des fluides contenant les acides nucléiques extraits ;
transférer lesdits fluides contenant les acides nucléiques extraits aux cavités (42) d'un portoir (19) de sortie au moyen d'embouts (34) jetables de pipette, chacun des fluides contenant les acides nucléiques extraits étant assigné un pour un à la fois à une cavité du portoir (19) de sortie et à un embout (34) jetable de pipette.

8. Procédé selon la revendication 7, dans lequel, pour chacun des échantillons, on utilise un embout (34) jetable de pipette pour transférer un réactif à l'échantillon et pour transférer le fluide contenant les acides nucléiques extraits obtenu par cette réaction dans une cavité (42) dudit portoir (19) de sortie.

9. Procédé selon la revendication 7, dans lequel, pour chacun des échantillons, on utilise un embout (34) jetable de pipette pour transférer un réactif à l'échantillon et on utilise un autre embout (34) jetable de pipette pour transférer le fluide contenant les acides nucléiques extraits obtenu par cette réaction dans une cavité (42) dudit portoir (19) de sortie.

10. Procédé selon l'une quelconque des revendications 7 à 9, dans lequel lesdits embouts (31) réutilisables de pipette sont lavés dans l'intervalle entre les opérations consécutives de pipetage.

11. Procédé selon l'une quelconque des revendications 7 à 10, dans lequel on utilise lesdits embouts (34) jetables de pipette pour transférer les déchets fluides survenant dans l'extraction des acides nucléiques dans les cavités d'un portoir (17) de résidus fluides.

12. Procédé selon l'une quelconque des revendications 7 à 11, dans lequel on stocke les embouts (34) jetables de pipette usagés résultant de l'extraction des acides nucléiques dans les cavités d'un portoir (16) de déchets d'embout.

13. Procédé selon l'une quelconque des revendications 7 à 12, dans lequel ledit portoir (18) de traitement est maintenu immobile pendant et dans l'intervalle entre la libération et la séparation des acides nucléiques.

14. Procédé selon l'une quelconque des revendications 7 à 13, dans lequel lesdits embouts (31) réutilisables de pipette sont déplacés dans une première gamme de mouvements et lesdits embouts (34) jetables de pipette sont déplacés dans une seconde gamme de mouvements, lesdites première et seconde gammes de mouvements se chevauchant uniquement au niveau d'une zone de portoir (21) de réactif renfermant ledit portoir (21) de réactif.
